# EUROPEAN PATENT APPLICATION

(11) **EP 1 782 993 A1**
(43) Date of publication of application: **09.05.2007**
(21) Application number: 06100403.2
(22) Date of filing: 16.01.2006
(51) Int. Cl.: B60K 15/04

(54) **Anti-siphon tank inlet assembly**

(30) Priority: 07.11.2005 EP 05110428
(71) Applicant: Jansen, Dirk, 2330 Merksplas (BE); Lambrechts, Guy, 2500 Lier (BE); Lambrechts, Kurt, 2500 Lier (BE)
(72) Inventor: Jansen, Dirk, 2330 Merksplas (BE); Lambrechts, Guy, 2500 Lier (BE); Lambrechts, Kurt, 2500 Lier (BE)
(74) Representative: Sarlet, Steven Renaat Irène

(57) **Abstract**

Anti-siphon fuel tank assembly for fitting to an inlet aperture of a fuel tank. The anti-siphon fuel tank assembly comprises a sleeve (05) with a perforated wall for accommodating a standard nozzle of a refuelling pump, an abutment (02) at the upper end of the sleeve (05) for abutting an abutment flange of the nozzle and an obstruction (06, 07) at the lower end of the sleeve (05) for blocking passage of a siphon tube. The abutment (02) and the obstruction (06, 07) are spaced a predetermined distance (D) from each other, chosen such that the standard nozzle can be fully accommodated in the sleeve (05) with the obstruction (06, 07) in close proximity of the end of the nozzle. The obstruction (06, 07) is shaped for avoiding early reflux during refuelling.

## Description

### Technical field

The present invention relates to an anti-siphon fuel tank inlet assembly for fitting to an inlet aperture of a fuel tank.

### Background art

An anti-siphon fuel tank inlet assembly is for example known from FR-A-2 855 463. The known fuel tank inlet assembly comprises a sleeve with a perforated wall and a closed base. The sleeve is introduced in an aperture of the fuel tank of a vehicle. A head is attached to the top end of the sleeve. This head has a lower part, facing the bottom end of the sleeve, adapted for being mounted on the aperture of the fuel tank, and an upper part, adapted for accommodating the cap of the fuel tank. The fuel tank inlet assembly further comprises locking means for locking the assembly onto the aperture of the fuel tank and preventing undesired removal of the fuel tank inlet assembly.

The anti-siphon fuel tank inlet assembly known from FR-A-2 855 463 however has the disadvantage that it does not prevent skimming, i.e. theft of the upper part of the fuel in a full fuel tank.

### Disclosure of the invention

It is an aim of the invention to provide an anti-siphon fuel tank assembly with which skimming can be prevented.

This aim is achieved according to the invention by means of an anti-siphon fuel tank inlet assembly comprising all the technical characteristics of claim 1.

The anti-siphon fuel tank assembly of the invention comprises a sleeve with a perforated wall for accommodating a standard nozzle of a refuelling pump, an abutment at the upper end of the sleeve for abutting an abutment flange of the nozzle and an obstruction at the lower end of the sleeve for blocking passage of a siphon tube. The perforations in the perforated wall of the sleeve enable fuel supply into the tank. The abutment and the obstruction are spaced a predetermined distance from each other, chosen such that the standard nozzle can be fully accommodated in the sleeve with the obstruction in close proximity of the end of the nozzle. The obstruction is shaped for avoiding early reflux during refuelling.

An analysis of the problem of the prior art has shown that skimming is still possible because the closed base of the sleeve, whose function is to prevent fuel theft, is below the top level of the fuel when the tank is completely filled. As a result, the top part of the fuel in the tank up to the level of the base can still be siphoned from the tank. With the anti-siphon fuel tank assembly of the invention, a more upwards obstruction for a siphoning tube is provided, more particularly on a position in the vicinity of the end of the standard nozzle during refuelling. This position is chosen such that the nozzle can still be accommodated in the sleeve, but that the obstruction is above the top level of the fuel in the completely filled tank. This is achieved by the fact that all common refuelling pumps operate with reflux valves to avoid overflow of fuel tanks. Reflux in the fuel current occurs when the level of the fuel approaches the end of the nozzle. Since the obstruction in the of the invention is located at this level, it always remains above the top level of the fuel in the tank and skimming can successfully be prevented.

The skilled person, faced with the problem of preventing skimming, would not immediately consider to place an obstruction right in front of the end of the nozzle of the refuelling pump. This is because such an obstruction could hamper the fuel current into the tank, which would trigger the reflux valve and interrupt the refuelling at an early stage. In order to avoid such an interruption in the refuelling, the obstruction of the anti-siphon fuel tank assembly of the invention is shaped for preventing early reflux.

In a preferred embodiment, the anti-siphon fuel tank assembly of the invention is adapted for use on fuel tanks of trucks. In this embodiment, the predetermined distance between the obstruction and the abutment is in the range of 50-100 mm, preferably 60-85 mm. In this way, any nozzle of a common truck refuelling pump can normally be accommodated in the sleeve, while skimming can effectively be prevented.

In a first preferred embodiment of the anti-siphon fuel tank assembly of the invention, the obstruction comprises a first perforated plate which is mounted in slanting direction in the sleeve. The slanted mounting of this perforated plate can prevent the early reflux during use. This first plate can for example be a V-shaped plate with its top pointing towards the upper end of the sleeve, or a V-shaped plate with its top pointing towards the lower end of the sleeve, or a substantially flat plate, or any other suitably shaped plate which is deemed suitable by the person skilled in the art. Furthermore, the obstruction preferably further comprises a second perforated plate which is mounted below the first perforated plate, the first and second perforated plates having non-overlapping perforations. In this way, there is no straight path via which a siphoning tube can be introduced, which can minimise the risk of fuel theft.

In a second preferred embodiment of the anti-siphon fuel tank assembly of the invention, the obstruction comprises a first obstruction element having a plurality of interspaced flat parts extending substantially parallel to the axis of the sleeve. These flat parts extending substantially parallel to the axis of the sleeve form substantially no obstruction for the fuel flow into the tank, so that the risk of early reflux is minimised with this embodiment. The first obstruction element can for example be a bent strip with a plurality of convolutions extending in radial direction of the sleeve, or any other suitably shaped strip which is deemed suitable by the person skilled in the art. Furthermore, the obstruction preferably comprises a second obstruction element which is mounted directly below the first obstruction element, the first and second obstruction elements having substantially the same shape but being angularly displaced with respect to each other. The angular displacement can again achieve that there is no straight path via which a siphoning tube can be introduced, which can minimise the risk of fuel theft.

In a preferred embodiment of the anti-siphon fuel tank assembly according to the invention, the assembly further comprises a dip stick slidably mounted in a corresponding opening in the obstruction. By means of this dip stick, authorities can verify the type of fuel in the tank.

In one embodiment of the anti-siphon fuel tank assembly according to the invention, the assembly further comprises a head at the upper end of the sleeve, the head having a lower part adapted for fixing the assembly on the aperture of the fuel tank and an upper part adapted for accommodating a cap. In this way, the anti-siphon fuel tank assembly can be fitted on the aperture of the fuel tank without any intermediary piece.

In this embodiment, the lower part of the head is preferably provided with snap-fitting locking means by means of which the assembly can be snap-fitted onto the aperture of the fuel tank. In this way, undesired removal of the anti-siphon fuel tank assembly from the fuel tank can be prevented.

Further in this embodiment, the upper part of the head has a shape corresponding to that of the aperture of the fuel tank. This has the advantage that the cap of the fuel tank can be reused, since it also fits on the head of the anti-siphon fuel tank assembly.

In another embodiment of the invention, the anti-siphon fuel tank assembly is integrated into an inlet aperture of a fuel tank.

### Brief description of the drawings

The invention will be further elucidated by means of the following detailed description and the appended drawings.

Figures 1 and 2 show perspective views of a first preferred embodiment of the anti-siphon fuel tank assembly of the invention.

Figure 3 shows an exploded view of the first embodiment.

Figures 4 and 5 show side views of the first embodiment, with underlying parts in dotted lines.

Figure 6 shows a top view of the first embodiment, with underlying parts in dotted lines.

Figures 7 and 8 show perspective views of a second preferred embodiment of the anti-siphon fuel tank assembly of the invention.

Figure 9 shows the dip stick of the second embodiment.

Figure 10 shows the first perforated plate of the second embodiment.

Figure 11 shows the second perforated plate of the second embodiment.

Figure 12 shows a perspective view of a third preferred embodiment of the anti-siphon fuel tank assembly of the invention.

Figure 13 shows the obstruction element of the third embodiment.

### Modes for carrying out the invention

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein can operate in other orientations than described or illustrated herein.

The term "comprising", used in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

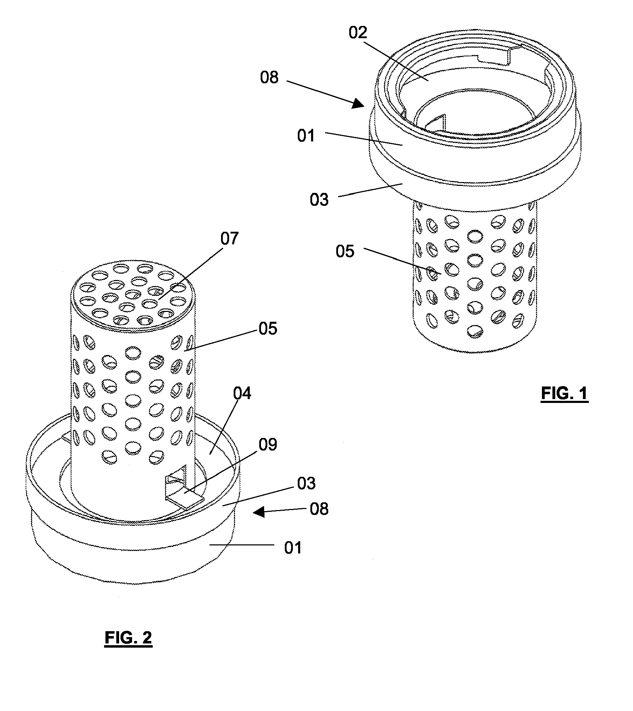

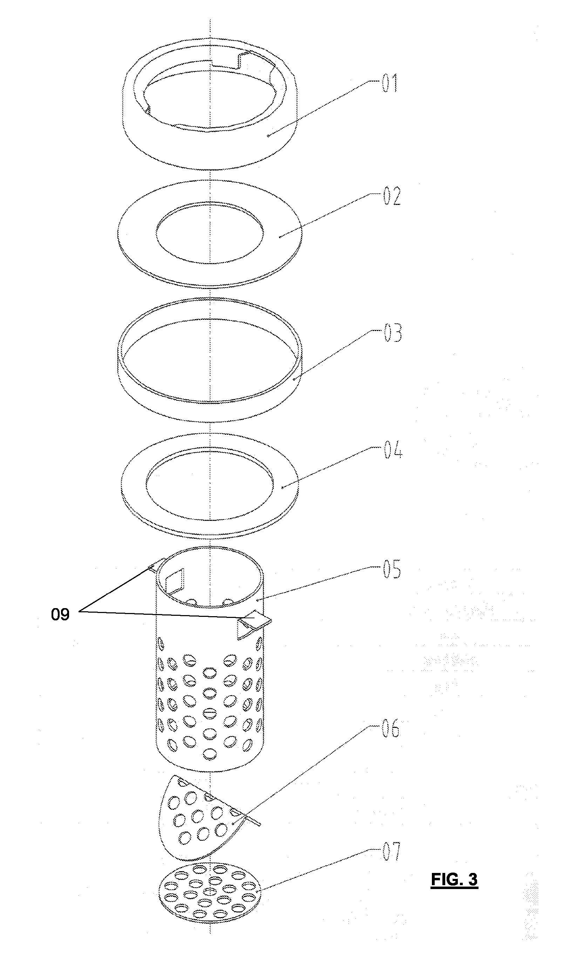

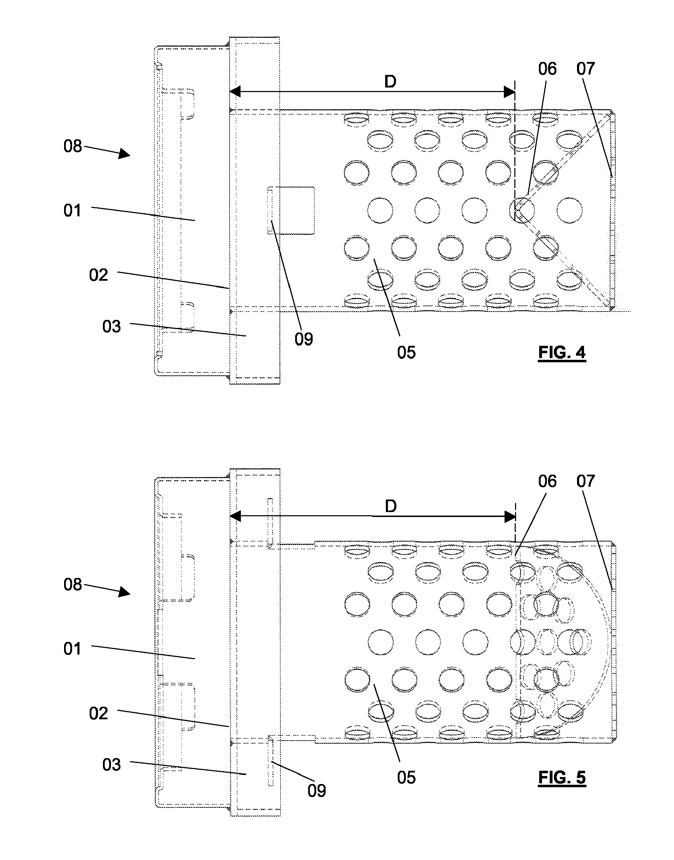

The first embodiment of the anti-siphon fuel tank assembly shown in figures 1-6 comprises a sleeve 05 with a perforated wall for accommodating a standard nozzle of a refuelling pump (not shown). A flange 02, fixed to the upper end of the sleeve 05, forms an abutment for abutting an abutment flange of the nozzle. Two perforated plates 06 and 07, fixed in the lower end of the sleeve 05, form an obstruction for blocking passage of a siphon tube (not shown). The perforations in the perforated wall of the sleeve 05 and in the perforated plates 06 and 07 enable fuel supply into the tank (not shown). The abutment flange 02 and the obstruction 06, 07 are spaced a predetermined distance D from each other. This distance D is chosen such that the standard nozzle can be fully accommodated in the sleeve 05 with the obstruction 06, 07 in close proximity of the end of the nozzle, i.e. close to or even in contact with the end of the nozzle. Furthermore, the obstruction 06, 07 is shaped for avoiding early reflux during refuelling, so that undesired triggering of the reflux valve of the refuelling pump and interruptions in the refuelling can be prevented.

The abutment flange 02 forms part of a head 08 of the anti-siphon fuel tank assembly. This head 08 is assembled from an upper part 01, the abutment flange 02, a lower ring 03 and a sealing ring 04. The upper part 01 is shaped in accordance with the aperture of the fuel tank to which the assembly is to be fitted, so that the original cap of the fuel tank fits on the upper part 03 and can be reused. The lower ring 03, the sealing ring 04 and two outstanding flanges 09 on the sleeve 05 form a lower part of the head 08 which fits on the aperture of the fuel tank. The outstanding flanges 09 form snap-fitting locking means: they snap-fit into complementary holes on the aperture and lock the assembly onto the tank, so that it cannot be removed without damaging it.

In the first embodiment shown in figures 1-6, the anti-siphon fuel tank assembly is adapted for use on fuel tanks of trucks. In this embodiment, the predetermined distance D between the obstruction 06, 07 and the abutment 02 is in the range of 50-100 mm, preferably 60-85 mm. In this way, any nozzle of a common truck refuelling pump can normally be accommodated in the sleeve, while skimming can effectively be prevented.

The obstruction for siphoning tubes comprises a first perforated plate 06 which is mounted in slanting direction in the sleeve 05. More particularly, in the embodiment shown this first plate is a V-shaped plate 06 with its top pointing towards the upper end of the sleeve 05. Alternatively, the first plate 06 may also be V-shaped with its top pointing towards the lower end of the sleeve, or a substantially flat plate mounted in slanting direction, or any other suitably shaped plate which is deemed suitable by the person skilled in the art. The slanting direction helps to prevent early reflux during refilling.

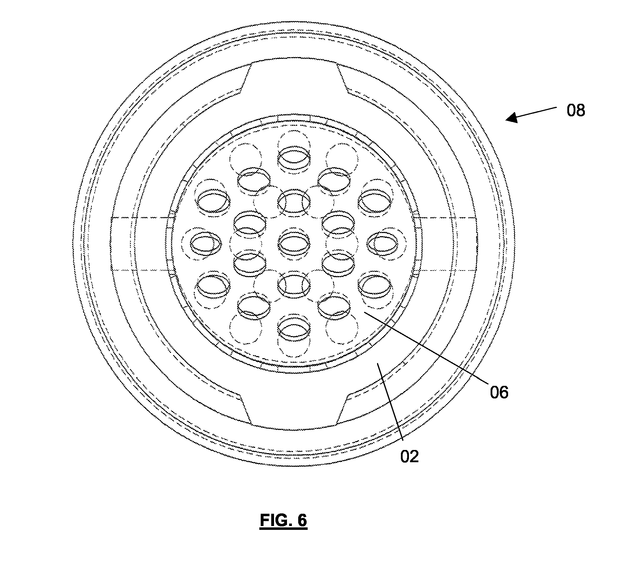

The obstruction further comprises a second perforated plate 07 which is mounted below the first perforated plate 06. In figure 6 it is clearly shown that the first and second perforated plates 06, 07 have non-overlapping perforations, so that there is substantially no straight path via which a siphoning tube can be introduced. The second plate 07 which is shown is a flat plate, mounted at the lower end of and perpendicular to the axis of the sleeve 05, but it is evident that other shapes and locations are possible, such as for example two V-shaped plates. In alternative embodiments, the second perforated plate 07 may also be omitted.

All parts of the embodiment of figures 1-6 are made from steel, with the exception of the sealing ring 04 which is made from rubber. However, any other materials known to the person skilled in the art may also be used.

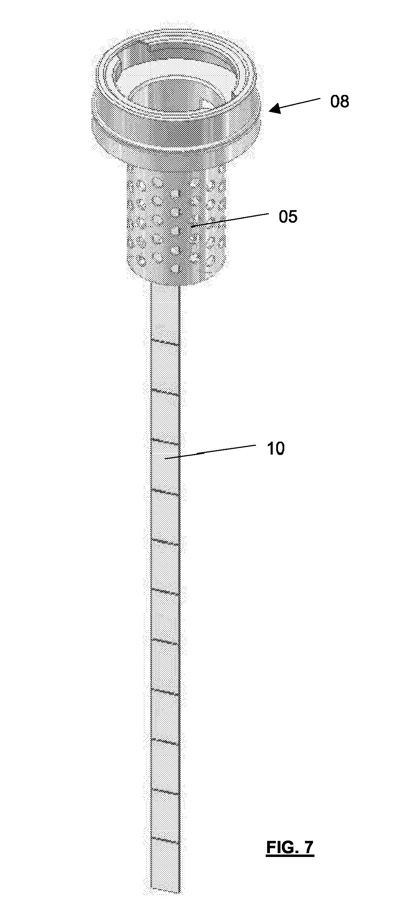

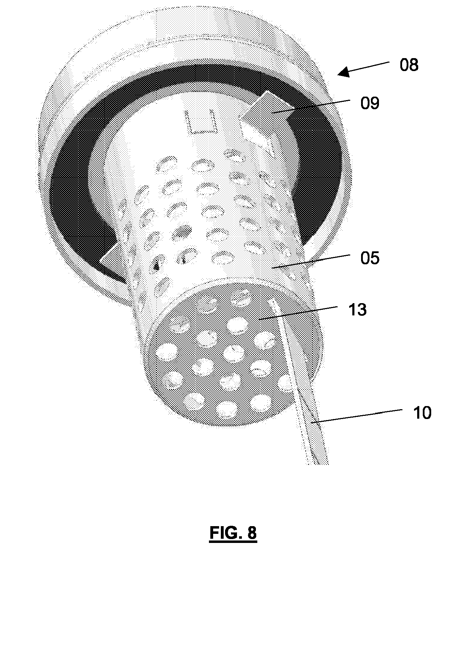

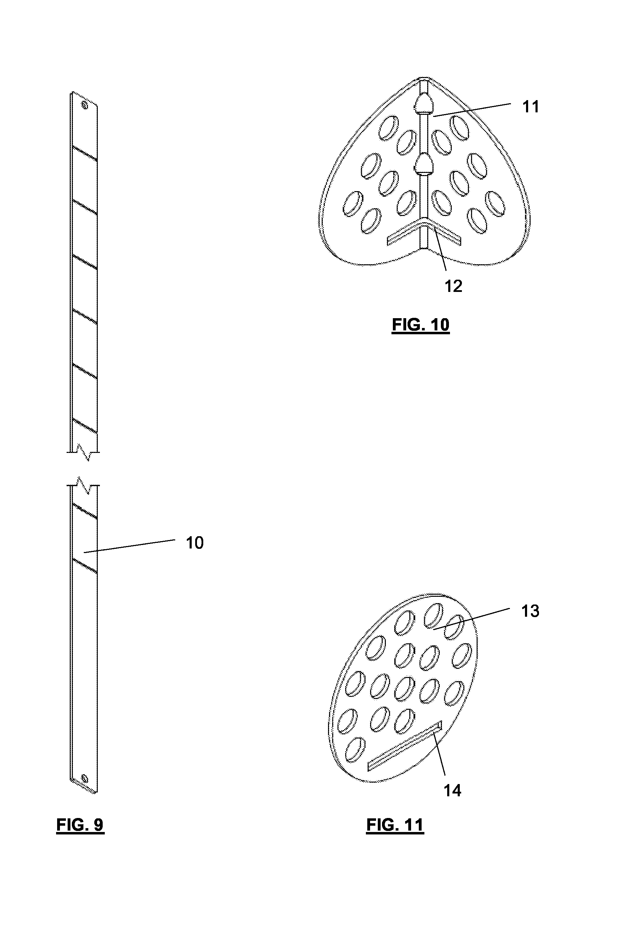

The second embodiment shown in figures 7-11 largely corresponds to the first embodiment shown in figures 1-6 and will therefore not be described in detail, apart from the differences. The parts which are the same have been given the same reference numbers; differing parts have been given different reference numbers.

In the second embodiment, the first and second perforated plates 11, 13, which otherwise have the same shape and location as in the first embodiment, both show an opening 12, 14 for accommodating a dip stick 10. The purpose of this dip stick 10 is to enable authorities to determine the type of fuel in the tank, so that fraud, such as for example illegally using cheaper fuel, can be tackled. The dip stick 10 also enables one to measure the fuel level in the tank. The dip stick 10 is slidably mounted in the openings 12, 14 of the plates 11, 13 and can be pulled out for checking the type of fuel. At both ends of the dip stick, stops are provided to prevent removal of the dip stick from the anti-siphon fuel tank assembly. These stops are formed by rings which are passed through small holes, but other forms are of course possible.

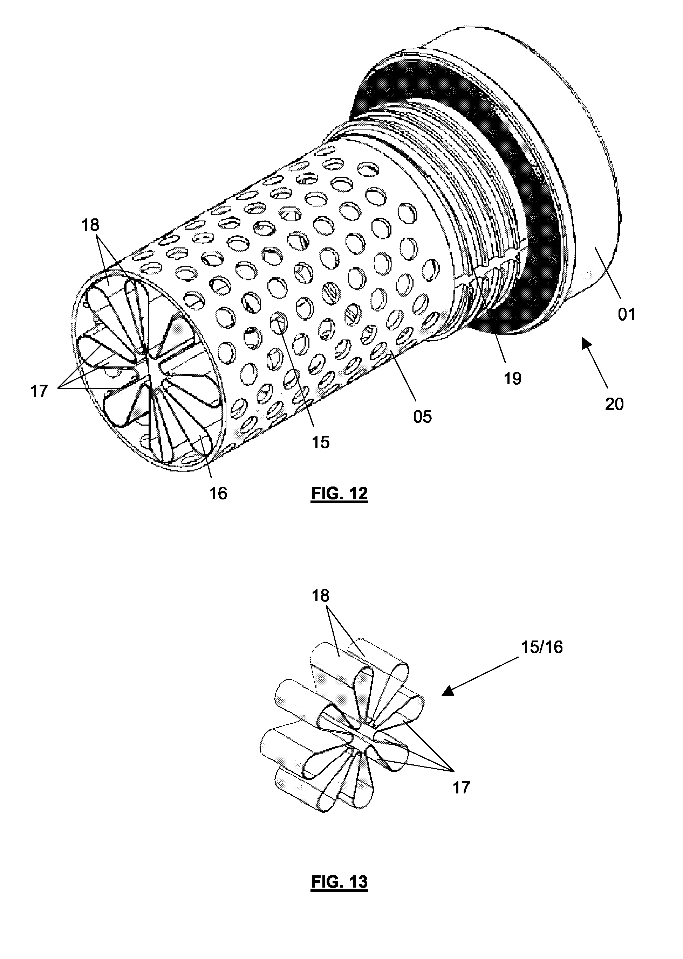

The third embodiment of the anti-siphon fuel tank assembly shown in figures 12-13 corresponds in many aspects to the first embodiment shown in figures 1-6. Therefore, only the differences will be described in great detail here.

The anti siphon fuel tank assembly of figures 12-13 has a different obstruction which comprises two substantially equally shaped obstruction elements 15, 16. Each of these obstruction elements 15, 16 is a bent strip with a "butterfly shape", i.e. a shape comprising convolutions 18 extending in radial direction of the sleeve 05 with flat parts 17 extending substantially from the centre up to the periphery of the sleeve 05. These flat parts are substantially parallel to the axis of the sleeve 05, so that they form substantially no obstruction for the fuel flow into the tank. The upper or "first" obstruction element 15 is mounted at distance D from the abutment flange 02 of the head 20. The lower or "second" obstruction element 16 is mounted directly below the upper obstruction element 15 at the bottom end of the sleeve 05.

The anti siphon fuel tank assembly of figures 12-13 further differs in the lower part of the head 20, which is provided with a screw-thread 19 complementary to an internal screw-thread of the aperture of the fuel tank. This implies that the anti siphon fuel tank assembly of figures 12-13 is adapted for a different type of fuel tanks than the one of figures 1-6. The upper part 01 of the head 20 is the same as in figures 1-6, so that the same cap can be used for both types. However, the upper part 01 may also have a shape with a screw-thread corresponding to that of the aperture of the fuel tanks for which the assembly is intended.

### Reference list

- 01: upper part
- 02: abutment flange
- 03: lower ring
- 04: sealing ring
- 05: sleeve
- 06: first perforated plate
- 07: second perforated plate
- 08: head
- 09: outstanding flanges
- 10: dip stick
- 11: first perforated plate
- 12: opening
- 13: second perforated plate
- 14: opening
- 15: first obstruction element
- 16: second obstruction element
- 17: flat parts
- 18: convolutions
- 19: external screw-thread
- 20: head

## Claims

1. Anti-siphon fuel tank assembly for fitting to an inlet aperture of a fuel tank, the anti-siphon fuel tank assembly comprising a sleeve (05) with a perforated wall for accommodating a standard nozzle of a refuelling pump, an abutment (02) at the upper end of the sleeve (05) for abutting an abutment flange of the nozzle and an obstruction (06, 07) at the lower end of the sleeve (05) for blocking passage of a siphon tube, **characterised in that** the abutment (02) and the obstruction (06, 07) are spaced a predetermined distance (D) from each other, chosen such that the standard nozzle can be fully accommodated in the sleeve (05) with the obstruction (06, 07) in close proximity of the end of the nozzle, and that the obstruction (06, 07) is shaped for avoiding early reflux during refuelling.

2. Anti-siphon fuel tank assembly according to claim 1, **characterised in that** the anti-siphon fuel tank assembly is adapted for use on fuel tanks of trucks and that said predetermined distance (D) is in the range of 50-100 mm, preferably 60-85 mm.

3. Anti-siphon fuel tank assembly according to claim 1 or 2, **characterised in that** the obstruction (06, 07) comprises a first perforated plate (06; 11) which is mounted in slanting direction in the sleeve (05).

4. Anti-siphon fuel tank assembly according to claim 3, **characterised in that** the first perforated plate (06; 11) is V-shaped with a top pointing towards the upper end of the sleeve (05).

5. Anti-siphon fuel tank assembly according to claim 3, **characterised in that** the first perforated plate is V-shaped with a top pointing towards the lower end of the sleeve (05).

6. Anti-siphon fuel tank assembly according to claim 3, **characterised in that** the first perforated plate is substantially flat.

7. Anti-siphon fuel tank assembly according to any one of the claims 3-6, **characterised in that** the obstruction (06, 07) comprises a second perforated plate (07; 13) which is mounted below the first perforated plate (06; 11), the first and second perforated plates having non-overlapping perforations.

8. Anti-siphon fuel tank assembly according to claim 1 or 2, **characterised in that** the obstruction (06, 07) comprises a first obstruction element (15) having a plurality of interspaced flat parts (17) extending substantially parallel to the axis of the sleeve (05).

9. Anti-siphon fuel tank assembly according to claim 8, **characterised in that** the first obstruction element (15) is a bent strip with a plurality of convolutions (18) extending in radial direction of the sleeve.

10. Anti-siphon fuel tank assembly according to claim 8 or 9, **characterised in that** the obstruction (06, 07) comprises a second obstruction element (16) which is mounted directly below the first obstruction element (15), the first and second obstruction elements (15, 16) having substantially the same shape but being angularly displaced with respect to each other.

11. Anti-siphon fuel tank assembly according to any one of the previous claims, further comprising a dip stick (10) slidably mounted in a corresponding opening (12, 14) in the obstruction (11, 13).

12. Anti-siphon fuel tank assembly according to any one of the previous claims, further comprising a head (08; 20) at the upper end of the sleeve (05), the head having a lower part (03, 04, 09; 19) adapted for fixing the assembly on the aperture of the fuel tank and an upper part (01) adapted for accommodating a cap.

13. Anti-siphon fuel tank assembly according to claim 12, **characterised in that** the lower part (03, 04, 09) of the head (08) is provided with snap-fitting locking means (09) by means of which the assembly can be snap-fitted onto the aperture of the fuel tank.

14. Anti-siphon fuel tank assembly according to claim 12, **characterised in that** the lower part of the head is provided with an external screw-thread (19) complementary to an internal screw-thread of the aperture of the fuel tank.

15. Anti-siphon fuel tank assembly according to any one of the claims 12-14, **characterised in that** the upper part (01) of the head (08) has a shape corresponding to that of the aperture of the fuel tank.

16. A fuel tank having an inlet aperture into which the anti-siphon fuel tank assembly according to any one of the claims 1-15 is integrated.
